# EUROPÄISCHE PATENTSCHRIFT

(11) **EP 1 315 340 B1**
(45) Veröffentlichungstag und Bekanntmachung des Hinweises auf die Patenterteilung: **12.10.2005**
(21) Anmeldenummer: 02025663.2
(22) Anmeldetag: 20.11.2002
(51) Int. Cl.: H04L 12/56, H04L 12/28

(54) **Verfahren und Steuergerät für ein paketorientiertes Datennetzwerk zur Übertragung von Daten in variablen Zeitschlitzen**
Method and control unit for a packet data network for the transmission of data in variable timeslots
Procédé et unité de commande d' un réseau par paquets pour la transmission de données dans des intervalles temporelles variables

(30) Priorität: 21.11.2001 DE 10157101
(43) Veröffentlichungstag der Anmeldung: 28.05.2003
(73) Patentinhaber: ALCATEL, 75008 Paris (FR)
(72) Erfinder: Klotsche, Ralf, Dipl. -Ing., 75305 Neuenbürg (DE)
(74) Vertreter: Brose, Gerhard

(56) Entgegenhaltungen:
- DROUBI M ET AL: "Dynamic bandwidth allocation for the HFC DOCSIS MAC protocol" COMPUTER COMMUNICATIONS AND NETWORKS, 2000. PROCEEDINGS. NINTH INTERNATIONAL CONFERENCE ON LAS VEGAS, NV, USA 16-18 OCT. 2000, PISCATAWAY, NJ, USA,IEEE, US, 16. Oktober 2000 (2000-10-16), Seiten 54-60, XP010524487 ISBN: 0-7803-6494-5
- DYSON D A ET AL: "A dynamic packet reservation multiple access scheme for wireless ATM" MILCOM 97 PROCEEDINGS MONTEREY, CA, USA 2-5 NOV. 1997, NEW YORK, NY, USA,IEEE, US, 2. November 1997 (1997-11-02), Seiten 687-693, XP010260781 ISBN: 0-7803-4249-6

## Beschreibung

Die vorliegende Erfindung betrifft ein Verfahren zur Übertragung von Daten in variablen Zeitschlitzen zwischen einem Steuergerät eines paketorientierten Datennetzwerks einerseits und einem Endgerät eines Teilnehmers des Datennetzwerks andererseits. Einem Endgerät werden nach Anforderung durch das Endgerät und in Abhängigkeit von der in dem Datennetzwerk zur Verfügung stehenden Übertragungskapazität Zeitschlitze zur Datenübertragung zugeteilt. Für jeden Datenfluss eines Endgeräts des Datennetzwerks wird die Datenübertragungsrate gesondert beobachtet.

Die Erfindung betrifft auch ein Steuergerät für ein paketorientiertes Datennetzwerk zur Übertragung von Daten in variablen Zeitschlitzen zwischen dem Steuergerät einerseits und einem Endgerät eines Teilnehmers des Datennetzwerks andererseits. Das Steuergerät umfasst:
- Mittel zum Empfang und zur Verarbeitung einer Anforderung eines Endgeräts nach Zeitschlitzen;
- Mittel zum Zuteilen von Zeitschlitzen auf die Anforderung des Endgeräts hin, wobei die Mittel zum Zuteilen die Zeitschlitze in Abhängigkeit von der in dem Datennetzwerk zur Verfügung stehenden Übertragungskapazität zuteilen; und
- Mittel zum Beobachten der Datenübertragungsrate jedes Datenflusses in dem Datennetzwerk.

Außerdem betrifft die vorliegende Erfindung auch ein Computerprogramm, das auf einem Rechengerät, insbesondere auf einem Mikroprozessor, eines Steuergeräts für ein paketorientiertes Datennetzwerk zur Übertragung von Daten in variablen Zeitschlitzen ablauffähig ist. Schließlich betrifft die Erfindung ein Speicherelement, insbesondere Random-Access-Memory, Read-Only-Memory oder Flash-Memory, auf dem ein solches Computerprogramm abgespeichert ist.

Die in dem Datennetzwerk zur Verfügung stehende Datenrate wird in erster Linie bestimmt durch die zwischen Anbieter und Teilnehmer vereinbarte minimale Datenrate. Die minimale Datenrate ist neben weiteren Vorgaben in einem sog. Service Level Agreement abgelegt. In zweiter Linie wird die zur Verfügung stehende Datenrate bestimmt durch die momentane Auslastung des Datennetzwerks durch Datenübertragungen. Für die Nutzung des Datennetzwerks wird von dem Teilnehmer üblicherweise ein Entgelt an den Anbieter entrichtet, das abhängig ist von der vereinbarten Datenrate.

Ein Endgerät, das Daten über das Datennetzwerk übertragen möchte, sendet eine Anforderung nach einem oder mehreren Zeitschlitzen an ein Steuergerät des Datennetzwerks. Je nach Verfügbarkeit von Zeitschlitzen bzw. je nach Auslastung des Datennetzwerks teilt das Steuergerät dem Endgerät die angeforderte Anzahl oder weniger Zeitschlitze zu. Bei einer sehr hohen Auslastung kann es sogar vorkommen, dass das Steuergerät die Anforderung des Endgeräts nicht erfüllen kann und ablehnt und ihm überhaupt keine Zeitschlitze zuteilt. Die abgelehnte Anforderung des Endgeräts wird in einer Warteschlange (z.B. einem First-In-First-Out (FIFO)-Speicher) des Steuergeräts abgelegt und zu einem späteren Zeitpunkt, zu dem eine geringere Auslastung des Datennetzwerks vorliegt, erfüllt werden, indem dem Endgerät dann angeforderte aber noch nicht zugeteilte Zeitschlitze zugeteilt werden. In der Warteschlange muss das anfordernde Endgerät und der Datenfluss, für den Zeitschlitze angefordert werden, sowie die Anzahl der angeforderten Zeitschlitze abgelegt werden. Zusätzlich muss jeder Anforderung ein entsprechender Zeitstempel zugeordnet sein. Das Ablegen der abgelehnten Anforderungen in der Warteschlange kann sehr speicherintensiv sein. Bei einer vollen Warteschlange gehen neue Anforderungen verloren.

Aus dem Stand der Technik ist es also bekannt, für die Zuteilung von Zeitschlitzen zu Beginn einer neuen Datenübertragung die Auslastung des gesamten Datennetzwerks bzw. die auf dem Datennetzwerk verfügbare Bandbreite zu berücksichtigen. Wenn einem Endgerät einmal eine bestimmte Anzahl von Zeitschlitzen für die Datenübertragung zugeteilt worden sind, darf der Teilnehmer in diesen seine Daten übertragen, selbst wenn diese Datenübertragung die gesamte oder einen Großteil der Übertragungskapazität des Datennetzwerks beansprucht. Während dieser Zeit können Anforderungen nach Zeitschlitzen von weiteren Endgeräten u.U. nicht vollständig oder überhaupt nicht erfüllt werden. Es kann zu Wartezeiten kommen, bevor die weiteren Endgeräte bedient werden. Für die Datenübertragungen der weiteren Endgeräte kann also keine minimale Antwortzeit garantiert werden, innerhalb der den Endgeräten die angeforderten oder eine minimale Anzahl von Zeitschlitzen zugewiesen werden können. Das kann für Anwendungen, bei denen eine minimale Antwortzeit und eine minimale Datenübertragungsrate sichergestellt werden muss, große Probleme bereiten. Solche Anwendungen werden auch als QoS (Quality of Service)-Anwendungen bezeichnet. Beispiele für QoS-Anwendungen sind VoIP (Voice over Internet Protocol)-Anwendungen.

Bei sog. Transfer-Control-Protokoll (TCP)/IP-Anwendungen beginnt die Datenübertragung mit einer relativ kleinen Datenrate. Während einer Datenübertragung wird die Qualität der Datenübertragung beobachtet und, falls diese eine vorgebbare Qualtitätsmindestanforderung erfüllt, so lange kontinuierlich gesteigert, bis die Mindestanforderung nicht mehr erfüllt ist. Dann wird die Datenübertragungsrate wieder auf den relativ kleinen Anfangswert reduziert und wieder von neuem langsam gesteigert. Wenn also die Qualität einer TCP/IP-Datenübertragung es zulässt, beansprucht eine solche Datenübertragung u.U. einen Großteil der in einem Datennetzwerk zur Verfügung stehenden Bandbreite. Zudem kann eine TCP/IP-Datenübertragung zu einer starken Schwankung der Netzauslastung führen. Das kann ein großer Störfaktor für QoS-Anwendungen sein.

Das bekannte Verfahren ist für alle Arten von Datennetzwerken anwendbar, in denen die Vergabe von Zeitschlitzen für die Datenübertragung zwischen den Engeräten und dem Steuergerät ausgehandelt werden muss. Bspw. ist das Datennetzwerk als ein Fernseh-Kabelnetzwerk ausgebildet, über das Video- und Audiodaten nach einem vorgebbaren Standard übertragen werden. Der Standard ermöglicht eine Datenübertragung nach dem Verfahren der eingangs genannten Art. Ein konkretes Beispiel für einen solchen Standard ist DVB (Digital Video Broadcasting), das vorwiegend in Europa Anwendung findet, oder DOCSIS (Data Over Cable Service Interface Specification), das insbesondere in den USA Anwendung findet. Bei DVB wird mit einem festen Zeitraster von bspw. drei Millisekunden gearbeitet. Pro Zeitraster werden 9, 18 oder 36 Zeitschlitze übertragen. In DVB sind die zwei untersten Schichten des ISO/OSI-Schichtenmodells spezifiziert, nämlich die physikalische Schicht und die Media Access Control (MAC)-Schicht bzw. Sicherungsschicht.

In letzter Zeit empfangen immer mehr Haushalte Fernsehsignale nicht mehr über Fernsehantenne oder Satelliten, sondern über ein Fernseh-Kabelnetz. Dabei sendet ein Fernsehsender über mehrere Kanäle in einem Fernsehband Video- und Audiosignale über einen sog. Combiner, der im wesentlichen einen Frequenzmultiplexer umfasst, und über das Fernseh-Kabelnetzwerk an Fernsehgeräte in den Haushalten. Um das Fernseh-Kabelnetzwerk auch für QoS-Anwendungen nutzen zu können, ist eine Vermittlungsvorrichtung (ein sog. Router) vorgesehen, die an das Internet angeschlossen ist. Der Router ist außerdem über eine bidirektionale Verbindung an einen Steuergerät des Netzwerks, einen sog. Interaktiven Netzwerk Adapter (INA), angeschlossen, das seinerseits ebenfalls über eine bidirektionale Verbindung mit dem Combiner in Verbindung steht. Der Router und der INA können in einem Gerät zusammengefasst sein. Die Endgeräte für die QoS-Anwendungen in einem Haushalt sind über sog. Set-Top-Boxen oder Kabelmodem (sog. Cable Modems) an das Fernseh-Kabelnetzwerk angeschlossen. Der Combiner übermittelt also sowohl die Video- und Audiosignale des Fernsehsenders als auch die Daten aus dem Internet in die Haushalte, wo sie auf die entsprechenden Endgeräte verteilt werden. Die Video- und Audiosignale werden bspw. an ein Fernsehgerät und die Internetdaten an einen Computer weitergeleitet. Für VoIP-Anwendungen ist der Computer mit geeigneten Erweiterungen ausgerüstet, die eine Ausgabe und Eingabe von Sprache ermöglichen.

In dem Fernseh-Kabelnetzwerk sind standardmäßig auch Rückkanäle vorgesehen, die eine sog. Upstream-Verbindung von den Endgeräten zu dem INA ermöglichen. Die Rückkanäle weisen jedoch im Vergleich zu den Downstream-Kanälen nur eine geringe Bandbreite auf. Für bestimmte Datenanwendungen werden jedoch auch über den Rückkanal relativ viele Daten übertragen. Auch über den Rückkanal muss eine bestimmte Qualität der Datenübertragung garantiert werden können (z.B. für QoS-Anwendungen). Die Qualität einer Datenübertragung umfasst insbesondere eine vorgebbare minimale Übertragungsrate, eine begrenzte Verzögerungszeit (d.h. Übertragungszeit der einzelnen in den Zeitschlitzen übertragenen Datenpakete) und einen begrenzten Jitter (d.h. Schwankung der Übertragungszeit der einzelnen übertragenen Datenpakete).

Aus Droubi, M. et al.: 'Dynamic bandwidth allocation for the HFC DOCSIS MAC protocol', Computer Communications and Networks 2000, Proceedings, Ninth International Conference on Las Vegas, NV, USA, 16-18 Oktober 2000, Piscataway , NJ, USA, IEEE, US, 16. Oktober 2000, Seiten 54-60, XP010524487, ISBN 0-7803-6494-5 ist ein Verfahren der eingangs genannten Art bekannt. Dabei werden Anforderungen für die Zuteilung von Zeitschlitzen in Warteschlangen abgelegt, wobei ein Zeitbezug durch in die Zukunft gerichtete Zeitpunkte für die geplante Abarbeitung der Anforderungen der in der Warteschlange abgelegten Anforderung hinzugefügt wird. Die Abarbeitung der Anfrage (Zuteilung der angeforderten Zeitschlitze) erfolgt dann zu dem angegebenen Zeitpunkt. Bei dem bekannten Verfahren werden keine vergangenen Zeitdauern, insbesondere keine verstrichenen Wartezeiten, beobachtet und auch nicht die Anzahl der tatsächlich zugeteilten Zeitschlitze in Abhängigkeit von den beobachteten Wartezeiten vorgegeben.

Der vorliegenden Erfindung liegt die Aufgabe zugrunde, eine Möglichkeit zu schaffen, bekannte Datennetzwerke zur Übertragung von Daten in variablen Zeitschlitzen auch für QoS-Anwendungen ohne Einschränkung der Funktionalität nutzen zu können.

Zur Lösung dieser Aufgabe schlägt die vorliegende Erfindung ausgehend von dem Verfahren der eingangs genannten Art vor, dass als Maß für die Datenübertragungsraten der Datenflüsse für jeden Datenfluss eine dynamische Wartezeit beobachtet wird, die zwischen der aktuellen Zeit bis zur Zuteilung von Zeitschlitzen zur Datenübertragung vergeht, und dem Endgerät weitere Zeitschlitze für einen der Datenflüsse in Abhängigkeit von der beobachteten Wartezeit des Datenflusses zugeteilt werden.

Erfindungsgemäß wird also vorgeschlagen, den Endgeräten weitere Zeitschlitze für eine bestimmte Datenübertragung in einem Datenfluss (sog. Data-Flow) in Abhängigkeit von der beobachteten Übertragungsrate dieses Datenflusses zuzuteilen. Dieser Art der Zuteilung kann eine an sich aus dem Stand der Technik bekannte Zuweisung von Zeitschlitzen in Abhängigkeit von der Auslastung des gesamten Datennetzwerks überlagert sein.

Die Vorteile der vorliegenden Erfindung liegen insbesondere darin, dass die Übertragungsrate für jeden einzelnen Datenfluss und nicht nur für das gesamte Datennetzwerk beobachtet wird. Erst dadurch wird es möglich, individuell für jeden Datenfluss Zeitschlitze derart zu vergeben, dass für jeden Datenfluss individuelle Vorgaben hinsichtlich der Qualität der Datenübertragung individuell berücksichtig und sogar garantiert werden können. Die Vorgaben umfassen bspw. eine minimale und/oder eine maximale Datenübertragungsrate. Die Vorgaben werden in Abhängigkeit von der Art der Anwendung, innerhalb der die Datenübertragung erfolgt, oder in Abhängigkeit von zwischen Anbieter und Teilnehmer getroffenen vertraglichen Vereinbarungen im Vorfeld der Datenübertragung festgelegt. Mit der vorliegenden Erfindung ist es erstmals möglich, über herkömmliche Datennetzwerke, die bisher lediglich für eine Datenübertragung im Rahmen des Internet, bspw. nach dem TCP/IP-Standard genutzt wurden, auch für die Datenübertragung im Rahmen von QoS-Anwendungen, bspw. für VoIP-Anwendungen, zu nutzen. Die vorliegende Erfindung ist für beliebige physikalische Datennetzwerke anwendbar, bspw. für Kabelfernsehnetzwerke.

Nicht für alle Datenübertragungen, die über das Netzwerk erfolgen, ist eine mininmale Datenübertragungsrate erforderlich. Es gibt auch sog. Best-Effort-Anwendungen (z.B. Datenübertragungen nach dem TCP/IP-Standard), bei denen die Datenübertragung nicht zeitkritisch ist und die übertragen werden, wenn das Netzwerk Übertragungskapazitäten frei hat. Erfindungsgemäß wird die Datenrate von Best-Effort-Anwendungen reduziert, falls im Rahmen von QoS-Anwendungen Zeitschlitze für die Datenübertragung angefordert und zugeteilt werden müssen. Falls es also die Zuteilung von Zeitschlitzen für QoS-Anwendungen erforderlich macht, wird die Anzahl der Zeitschlitze, die für Best-Effort-Anwendungen zugeteilt werden, reduziert. Dadurch können die zugesicherten Vorgaben für die QoS-Anwendungen, insbesondere eine garantierte Übertragungsqualität, unabhängig von der Auslastung des gesamten Datennetzwerks stets erfüllt werden. Die Zuteilung von Zeitschlitzen für einen Datenfluss einer Best-Effort-Anwendung erfolgt also nicht nur in Abhängigkeit der Datenrate des Datenflusses, sondern auch in Abhängigkeit von den Datenraten von Datenflüssen anderer Anwendungen (z.B. QoS-Anwendungen). Durch eine Bevorzugung der QoS-Anwendungen gegenüber den Best-Effort-Anwendungen bei der Zuteilung vorhandener Zeitschlitze zur Datenübertragung kann zudem eine Überlastung des Datennetzwerks verhindert werden.

Schließlich kann mit der vorliegenden Erfindung die Bandbreite von Datenflüssen über das Datennetzwerk sicher und zuverlässig überwacht werden. Dies ist besonders hilfreich für eine datenratenabhängige Abrechnung der Nutzung des Datennetzwerks und für eine den Vorgaben entsprechende Auslegung der Übertragungskapazitäten des Datennetzwerks. Ein Datennetzwerk wird hinsichtlich seiner Übertragungskapazität vorzugsweise derart ausgelegt, dass QoS-Anwendungen immer mit einer garantierten Datenrate und gleichzeitig Best-Effort-Anwendungen mit einer minimalen Datenrate arbeiten können.

Erfindungsgemäß kann einerseits eine minimale Datenrate für eine Datenübertragung gewährleistet werden, sofern die Auslastung des gesamten Datennetzwerks dies zulässt. Gleichzeitig kann für die Datenübertragung eine maximale Datenrate vorgegeben werden, die selbstverständlich oberhalb der minimalen Datenrate liegt. Je niedriger die maximale Datenrate ist, desto mehr Endgeräte bzw. Teilnehmer können an das Datennetzwerk angeschlossen werden und desto effektiver kann die verfügbare Bandbreite des Datennetzwerks auf viele Teilnehmer verteilt werden.

Es wird vorgeschlagen, dass als Maß für die Datenübertragungsraten der Datenflüsse für jeden Datenfluss eine dynamische Wartezeit beobachtet wird, die zwischen der aktuellen Zeit bis zur Zuteilung von Zeitschlitzen zur Datenübertragung vergeht, und dem Endgerät weitere Zeitschlitze für einen der Datenflüsse in Abhängigkeit von der beobachteten Wartezeit des Datenflusses zugeteilt werden. Die Wartezeit ist die Differenz zwischen der Zeit der Zuteilung von Zeitschlitzen und der aktuellen Zeit. Üblicherweise werden zunächst denjenigen Datenflüssen Zeitschlitze zugeteilt, die die niedrigsten Wartezeiten haben.

Über die Wartezeit kann die Datenübertragungsrate des Datenflusses beeinflusst werden; je länger die Wartezeit ist, desto geringer ist die Datenrate. Die Wartezeiten erlauben also eine Drosselung der Datenraten der jeweiligen Datenflüsse, im Extremfall bis hin zu Null. Mit Hilfe der Wartezeit kann eine effektive Kontrolle und Koordination der Datenübertragung realisiert werden, da anhand der Wartezeit eine vorausschauende Zuweisung der Zeitschlitze möglich ist. Die Kontrolle und Koordination der Datenübertragung umfasst das sog. Policing (d. h. den einzelnen Datenflüssen eine begrenzte Anzahl von Zeitschlitzen zuzuteilen, um eine geforderte Datenrate zu erzielen) und das sog. Shaping (d. h. Zeitschlitze zuteilen, um die in dem Datennetzwerk zur Verfügung stehende Bandbreite optimal auszunutzen).

Die Wartezeiten können auch in verschiedene Kategorien (sog. Policy Levels) unterteilt werden. Die Zuteilung von Zeitschlitzen geschieht dann in Abhängigkeit von der aktuellen Policy Level des Datenflusses. Wenn die Wartezeit eines Datenflusses nach einer Erhöhung um das Wartezeitinkrement eine obere Zeitgrenze der bisherigen Policy Level übersteigt, wird dem Datenfluss die nächst niedrigere Policy Level zugeordnet. Wenn die Wartezeit mit der Zeit kleiner wird, sind auch Sprünge in die nächst höhere Policy Level denkbar. Es sind auch Sprünge um mehrere Policy Levels auf einmal denkbar. Durch die Einführung der Policy Levels wird die Handhabung der einzelnen Datenflüsse deutlich vereinfacht. Die Zuteilung von Zeitschlitzen beginnt bspw. bei der ranghöchsten Policy Level (mit den kürzesten Wartezeiten).

Gemäß einer vorteilhaften Weiterbildung der vorliegenden Erfindung wird vorgeschlagen, dass die dynamische Wartezeit für einen Datenfluss nach der Zuteilung von Zeitschlitzen für den Datenfluss um ein Wartezeitinkrement erhöht wird. Mit der Zeit wird die Wartezeit immer kleiner, bis sie schließlich einen vorgebbaren Wert unterschreitet und dem entsprechenden Datenfluss die angeforderten Zeitschlitze oder ein Teil davon zugeteilt werden. Auf diese Weise kann für jeden Datenfluss eine maximale Datenrate vorgegeben und sichergestellt werden, dass ein Datenfluss nicht zu viel Bandbreite beansprucht und dadurch andere Datenflüsse, insbesondere Datenflüsse von QoS-Anwendungen, beeinträchtigt werden, d.h. dass die garantierten Vorgaben nicht erfüllt werden können.

Durch die Vorgabe der maximalen Datenrate werden sog. DOS (Denial of Service)-Angriffe deutlich erschwert. DOS-Angriffe werden beim Stand der Technik bspw. ausgelöst, indem von einem Endgerät des Datennetzwerks aus so viele Zeitschlitze für eine Datenübertragung angefordert werden, dass praktisch die gesamte Bandbreite des Datennetzwerks benötigt wird. Für weitere Datenübertragungen stehen dann keine Übertragungskapazitäten mehr zur Verfügung. Bei der vorliegenden Erfindung wird die Anzahl der pro Datenfluss zugeordneten Zeitschlitze durch die vorgebbare maximale Datenrate begrenzt. Eine Inanspruchnahme der gesamten Bandbreite eines Datennetzwerks und damit ein Blockieren des Datennetzwerks durch eine Anwendung ist somit nicht möglich.

Gemäß einer bevorzugten Ausführungsform wird das Wartezeitinkrement in Abhängigkeit von der Anzahl der zugeteilten Zeitschlitze erhöht. Je mehr Zeitschlitze einem Datenfluss zugeteilt werden, desto größer wird das Wartezeitinkrement für diesen Datenfluss gewählt und desto länger ist die Wartezeit für den Datenfluss bis zur nächsten Zuteilung.

Vorteilhafterweise wird die Wartezeit eines Datenflusses in Abhängigkeit von einer für den Datenfluss vorgebbaren Datenübertragungsrate ermittelt. Die vorgebbare Datenübertragungsrate kann eine minimale oder eine nominale Datenübertragungsrate oder aber eine erlaubte Überlast sein. Auf diese Weise werden trotz der Wartezeiten, durch die eine Überlastung des Datennetzwerks verhindert wird, die vorgegebenen Datenübertragungsraten der einzelnen Datenflüsse auf jeden Fall erfüllt.

Gemäß einer anderen vorteilhaften Weiterbildung der vorliegenden Erfindung wird vorgeschlagen, dass für jeden Datenfluss eines Endgeräts die Gesamtsumme aller Anforderungen nach Zeitschlitzen gespeichert wird, wobei die Gesamtsumme bei einer Anforderung nach Zeitschlitzen um die Anzahl an angeforderten Zeitschlitzen erhöht und bei einer Zuteilung von Zeitschlitzen um die Anzahl an zugeteilten Zeitschlitzen erniedrigt wird. Die Gesamtsummen lösen die aus dem Stand der Technik bekannten Warteschlangen ab. Die Gesamtsummen umfassen für jeden Datenfluss lediglich die Anzahl der zur Zeit angeforderten Zeitschlitze. Zusätzliche Informationen, wie bspw. das anfordernde Endgerät, ein Zeitstempel oder der Datenfluss, für den Zeitschlitze angefordert werden, muss nicht gespeichert werden. Durch die Einführung der Gesamtsummen ist eine schnellere Verarbeitung möglich. Zudem wird ein Überlauf der Warteschlange und ein Verlust die Kapazität der Warteschlangen übersteigender Anforderungen vermieden. Schließlich benötigen die Gesamtsummen einen deutlich verringerten Speicherplatzbedarf gegenüber den Warteschlangen.

Als eine weitere Lösung der Aufgabe der vorliegenden Erfindung wird ausgehend von dem Steuergerät der eingangs genannten Art vorgeschlagen, dass das Steuergerät Mittel zur Ausführung des erfindungsgemäßen Verfahrens aufweist.

In einem ISO/OSI-Schichtenmodell betrachtet, ist in dem Steuergerät eine Schnittstelle realisiert, die QoS-Anforderungen aus der IP (Internet Protocol)-Schicht und darüber liegenden Schichten auf die MAC (Media Access Control)-Schicht (sog. Sicherungsschicht) abbildet.

Insbesondere verfügt das Steuergerät über Mittel zum Beobachten und Ermitteln der datenflussindividuellen Wartezeiten als Differenz einer Zeit der Zuteilung von Zeitschlitzen und der aktuellen Zeit und über Mittel zum Zuteilen von Zeitschlitzen in Abhängigkeit der Wartezeiten. Außerdem verfügt das Steuergerät über den einzelnen Datenflüssen zugeordnete Speichermittel, zum Ablegen der datenflussindividuellen Gesamtsummen der Anforderungen von Zeitschlitzen.

Von besonderer Bedeutung ist die Realisierung des erfindungsgemäßen Verfahrens in der Form eines Computerprogramms, das auf einem Rechengerät, insbesondere auf einem Mikroprozessor, eines Steuergeräts für ein Datennetzwerk zur Übertragung von Daten in variablen Zeitschlitzen ablauffähig und zur Ausführung des erfindungsgemäßen Verfahrens geeignet ist. Vorzugsweise ist das Computerprogramm auf einem Speicherelement abgespeichert, das für das Steuergerät vorgesehen ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: eine vereinfachte Darstellung eines Datennetzwerks zur Realisierung eines erfindungsgemäßen Verfahrens;
- Figur 2: eine schematische Darstellung eines Datennetzwerks zur Realisierung eines erfindungsgemäßen Verfahrens;
- Figur 3: eine schematische Darstellung eines erfindungsgemäßen Steuergeräts des Datennetzwerks aus Figur 1;
- Figur 4: ein Ablaufdiagramm eines erfindungsgemäßen Verfahrens;
- Figur 5: ein Ablaufdiagramm einer Task zur Verarbeitung von Anforderungen im Rahmen des erfindungsgemäßen Verfahrens aus Figur 4;
- Figur 6: ein Ablaufdiagramm einer Task zur Zuteilung von Zeitschlitzen im Rahmen des erfindungsgemäßen Verfahrens aus Figur 4; und
- Figur 7: das Steuergerät aus Figur 3 in einer anderen Ansicht.

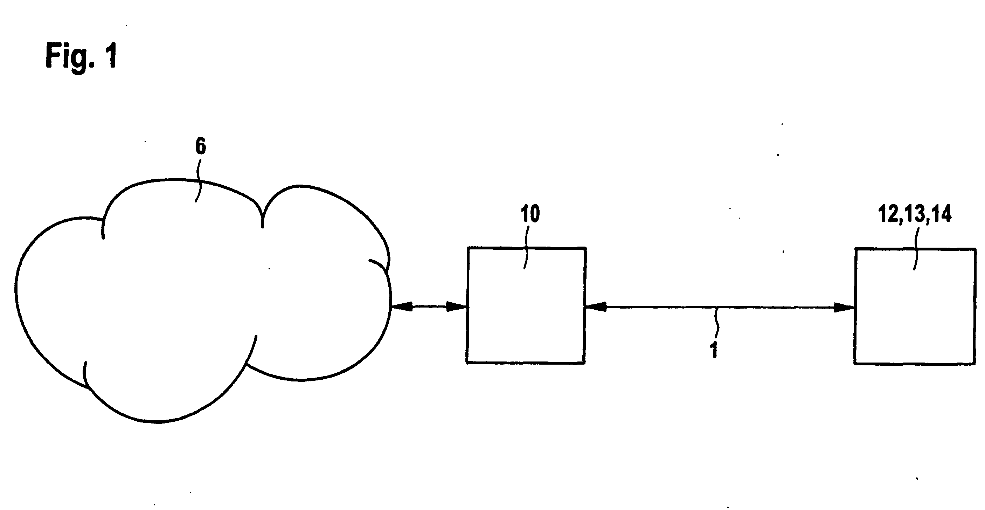

In Figur 1 ist ein Datennetzwerk zur Realisierung eines erfindungsgemäßen Verfahrens in seiner Gesamtheit mit dem Bezugszeichen 1 bezeichnet. Das Datennetzwerk 1 erstreckt sich zwischen einem Steuergerät 10 des Datennetzwerks 1 und einem Endgerät 13, 14. Über das Datennetzwerk werden Daten in variablen Zeitschlitzen übertragen.

Das Steuergerät 10 ist bspw. als ein sog. Interaktiver Netzwerk Adapter (INA) eines Kabelfernseh-Netzwerks und das Endgerät 13, 14 bspw. als ein Telefon 14 oder als ein entsprechend ausgestatteter Computer 13 ausgebildet. Der INA steht bspw. mit dem Internet 6 in Verbindung. Mit der vorliegenden Erfindung ist es bspw. möglich, über das Kabelfernseh-Netzwerk Internet-Datenübertragungen mit einer vorgebbaren Mindestübertragungsrate abzuwickeln.

Ebenso kann das Steuergerät 10 als eine Satelliten-Sende-/Empfangsstation eines Statellitennetzwerks und das Endgerät 13, 14 bspw. als ein Satellitentelefon oder als ein entsprechend ausgestatteter Computer ausgebildet sein. Die Satelliten-Sende-/Empfangsstation steht bspw. über.ein Satellitennetzwerk 6 mit weiteren Satelliten-Sende/Empfangsstationen in Verbindung. Mit der vorliegenden Erfindung ist es auch möglich, Daten mit einer garantierten Datenübertragungsrate über das Satellitennetzwerk zu übertragen. Das ist bspw. für Satellitentelefonie mit und ohne Video vorteilhaft.

Die vorliegende Erfindung ist also überall dort einsetzbar, wo im Rahmen einer Datenübertragung in variablen Zeitschlitzen über beliebige physikalische Datennetzwerke 1 eine vorgebbare Qualität der Datenübertragung, wie minimale Übertragungsrate, begrenzte Verzögerungszeit (d.h. Übertragungszeit der einzelnen in den Zeitschlitzen übertragenen Datenpakete) und begrenzter Jitter (d.h. Schwankung der Übertragungszeit der einzelnen übertragenen Datenpakete), erfüllt werden muss.

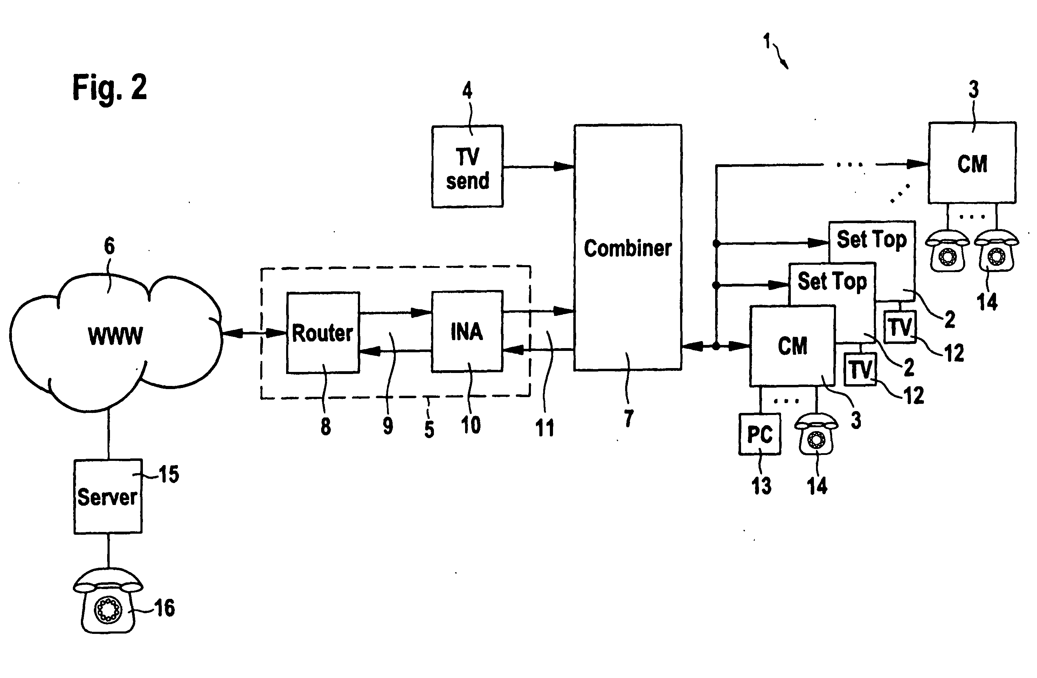

In Figur 2 ist ein bevorzugtes Ausführungsbeispiel des Datennetzwerks 1 aus Figur 1 dargestellt. Das Datennetzwerk 1 ist als ein Fernseh-Kabelnetzwerk ausgebildet. Über das Datennetzwerk 1 sind Endgeräte 12, 13, 14 von Teilnehmern des Datennetzwerks mit mindestens einem Diensteanbieter verbunden. Der Diensteanbieter ist bspw. ein Kabelfernsehbetreiber, mit dem als Fernsehgeräte 12 ausgebildete Endgeräte über das Kabelfernseh-Netzwerk 1 in Verbindung stehen. Bei dem Kabelfernsehbetreiber ist ein Fernsehsender 4 angeordnet, der über das Kabelfernseh-Netzwerk 1 Fernsehsignale an die Fernsehgeräte 12 überträgt. Die Fernsehgeräte 12 sind über sog. Set-Top-Boxen 2 an das Kabelfernseh-Netzwerk 1 angeschlossen. Der Diensteanbieter kann auch ein Internet-Service-Provider sein, mit dem als Computer 13 oder Telefongeräte 14 ausgebildete Endgeräte über das Kabelfernseh-Netzwerk 1 in Verbindung stehen. Bei dem Internet-Service-Provider ist ein INA 10 angeordnet, der über einen Router 8 mit einem Internet Protocol (IP)-Backbone-Netzwerk 6, z.B. dem Internet 6, in Verbindung steht. Der INA 10 und der Router 8 können auch zu einer Geräteeinheit 5 zusammengefasst sein. Der Fernsehsender 4 und die Geräteeinheit 5 können auch Teil des Internet 6 sein.

Über das Datennetzwerk 1 werden Video- und Audiosignale von dem Fernsehsender 4 an die Set-Top-Boxen 2 nach einem vorgebbaren Standard übertragen. Konkrete Beispiele für einen solchen Standard sind DVB (Digital Video Broadcasting), das vorwiegend in Europa Anwendung findet, und DOCSIS (Data Over Cable Service Interface Specification), das insbesondere in den USA Anwendung findet. Die Video- und Audiosignale werden über mehrere Kanäle in einem Fernsehband übertragen.

Um das Kabelfernseh-Netzwerk 1 auch für beliebige Datenanwendungen nutzen zu können, ist ein Combiner 7 vorgesehen, der die Datensignale und die Fernsehsignale nach Art eines Multiplexers verbindet und über das Kabelfernseh-Netzwerk 1 an die Endgeräte 12, 13, 14 leitet. Beispiele für Datenanwendungen sind Transfer-Control-Protokoll (TCP)/IP-Anwendungen (sog. Web Browsing) und Quality of Service (QoS)-Anwendungen (z. B. VoIP (Voice over Internet Protocol)-Anwendungen) mit besonderen Anforderungen an die Übertragungsqualität.

Der Router 8 leitet IP-Datenpakete von dem Kabelfernseh-Netzwerk 1 an das Internet 6 weiter. Der Router 8 ist außerdem über eine bidirektionale Verbindungsleitung 9 an den Interaktiven Netzwerk Adapter (INA) 10 angeschlossen, der seinerseits ebenfalls über eine bidirektionale Verbindungsleitung 11 mit dem Combiner 7 in Verbindung steht. Der Router 8 und der INA 10 können auch in einem einzigen Gerät zusammengefasst sein.

Die von dem Fernsehsender 4 ausgesandten Fernsehsignale werden über den Combiner 7 und das Kabelfernseh-Netzwerk 1 an die Set-Top-Boxen 2 und weiter an die Fernsehgeräte 12 übertragen. Die Set-Top-Boxen 2 trennen verschiedene über das Kabelfernseh-Netzwerk übertragene Daten wieder auf. Die IP-Datenpakete aus dem Internet 6 werden über den Router 8, den INA 10, den Combiner 7 und das Kabelfernseh-Netzwerk 1 an Kabelmodems (sog. Cable Modems) 3 und weiter an Telefone 14 oder entsprechend ausgestattete Computer 13 übertragen. Die Kabelmodems 3 dienen zum Empfangen des Datendienstes über das Kabelfernseh-Netzwerk 1.

An die Set-Top-Boxen 2 sind Fernsehgeräte 12, Videorecorder oder andere Geräte angeschlossen, die zum Empfang und zur Verarbeitung der Video- und Audiosignale geeignet sind. An die Kabelmodems 3 sind Engeräte angeschlossen, die zur Nutzung der angebotenen Datenanwendung geeignet sind, wie bspw. Computer 13 oder Telefone 14. Für VoIP-Anwendungen sind die Computer 13 mit geeigneten Erweiterungen ausgerüstet, die eine Ausgabe und Eingabe von Sprache ermöglichen. Über einen Internetserver 15 ist ein weiteres Telefongerät 16 an das Internet 6 angeschlossen. Im Rahmen einer VoIP-Anwendung werden bspw. Audiodaten zwischen dem Telefongerät 16 und einem geeigneten Endgerät 13, 14 übertragen.

In einem Fernseh-Kabelnetzwerk 1 sind standardmäßig auch Rückkanäle vorgesehen, die eine sog. Upstream-Verbindung von den Endgeräten 12, 13, 14 zu dem INA 10 ermöglichen. Die Rückkanäle werden bspw. für Video auf Abruf (sog. Video on Demand) und für eine Vielzahl von Datenanwendungen benötigt. Für bestimmte Datenanwendungen, bspw. für VoIP-Anwendungen, werden auch über den Rückkanal relativ viele Daten übertragen. Die Rückkanäle weisen jedoch nur eine geringe Bandbreite auf, wodurch sich eine Beeinträchtigung der Übertragungsqualität ergeben kann. Auch über den Rückkanal sollte für bestimmte Datenanwendungen eine vorgebbare Qualität der Datenübertragung garantiert werden können (z.B. für QoS-Anwendungen). Hier setzt die vorliegende Erfindung an.

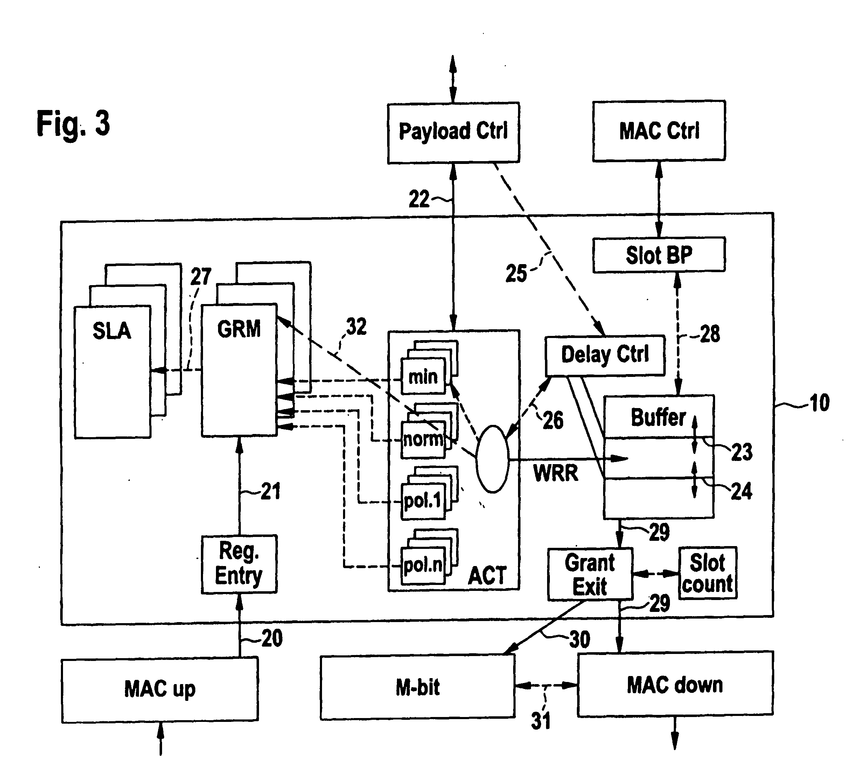

In Figur 3 ist ein erfindungsgemäßes Steuergerät 10 für ein Datennetzwerk 1 gemäß einer bevorzugten Ausführungsform dargestellt. Das Steuergerät 10 ist als ein Interaktiver Netzwerk Adapter (INA) ausgebildet. Es verarbeitet eingehende Anforderungen 20 der Endgeräte 12, 13, 14 nach Zeitschlitzen für eine Datenübertragung (MAC up) über das Datennetzwerk 1. Das Endgerät, 12, 13, 14, das Daten über das Datennetzwerk 1 übertragen möchte, sendet eine Anforderung 20 nach einem oder mehreren Zeitschlitzen an das Steuergerät 10. Je nach Verfügbarkeit von Zeitschlitzen bzw. je nach Auslastung des gesamten Datennetzwerks 1 teilt das Steuergerät 10 dem Endgerät 12, 13, 14 die angeforderte Anzahl oder weniger Zeitschlitze zu (MAC down). Die Einheit MAC Message Handler Upstream (MAC up) dient zum Extrahieren der Anforderungen aus Datenpaketen der MAC-Schicht (Sicherungsschicht) eines ISO/OSI-Schichtenmodells. Die Einheit MAC Message Handler Downstream (MAC down) dient zum Verpacken der Daten über die zugeteilten Zeitschlitze in Datenpaketen der MAC-Schicht.

In dem Steuergerät 10 werden die Anforderungen 20 über eine Durchreicheeinheit Grant Request Entry (Req. Entry) an sog. Grant Request Meter (GRM) weitergeleitet. Für jeden Datenfluss (sog. Data Flow) in dem Datennetzwerk 1 ist ein eigenes Grant Request Meter (GRM) vorgesehen. Als ein Datenfluss wird eine paketorientierte (keine leitungsorientierte) Verbindung zwischen einem der Endgeräte 12, 13, 14 des Datennetzwerks 1 und einem der Diensteanbieter 4, 5 bezeichnet. In der Einheit Grant Request Entry (Req. Entry) werden Parameter der Anforderungen 20 auf die Datenflüsse umgesetzt und an den Grant Request Meter (GRM) des entsprechenden Datenflusses übergeben.

In den Grant Request Meter (GRM) werden Gesamtsummen aller Anforderungen von Zeitschlitzen zur Datenübertragung für die einzelnen Datenflüsse geführt. Beim Eintreffen einer neuen Anforderung 20 nach Zeitschlitzen für einen bestimmten Datenfluss wird die Gesamtsumme des entsprechenden Grant Request Meters (GRM) um die angeforderte Anzahl an Zeitschlitzen erhöht. Nach jeder Zuteilung 29 von Zeitschlitzen für einen bestimmten Datenfluss wird die Gesamtsumme des entsprechenden Grant Request Meters (GRM) um die zugeteilte Anzahl an Zeitschlitzen verringert. Die Gesamtsummen stellen ein Maß für die Datenmenge dar, für die Übertragungskapazität angefordert ist. Die in den Grant Request Metern (GRM) geführten Gesamtsummen lösen die aus dem Stand der Technik bekannten Warteschlangen für die Anforderungen ab. Durch die Einführung der Gesamtsummen ist eine schnellere Verarbeitung möglich. Zudem wird ein Überlauf der Warteschlange und ein Verlust die Kapazität der Warteschlangen übersteigender Anforderungen vermieden. Schließlich benötigen die Gesamtsummen einen deutlich verringerten Speicherplatzbedarf gegenüber den Warteschlangen. Jedem Grant Request Meter (GRM) ist ein bestimmtes Service Level Agreement (SLA) zugeordnet. Die Grant Request Meter (GRM) enthalten die dynamischen Daten der Datenflüsse, wohingegen in den Service Level Agreements (SLA) die statischen Daten abgelegt sind. Üblicherweise gibt es weniger Service Level Agreements (SLA) als Datenflüsse in dem Datennetzwerk 1, so dass mehreren Datenflüssen das gleiche Service Level Agreement (SLA) zugeordnet sein kann. Die Vorgaben umfassen bspw. Informationen darüber, wie ein Datenfluss im Rahmen einer bestimmten Anwendung gehandhabt werden muss. Die Vorgaben umfassen insbesondere bestimmte Qualitätsanforderungen an die Datenübertragung über die Datenflüsse.

Das Steuergerät 10 umfasst außerdem eine Einheit Aktive Flows (ACT), in der alle aktiven Datenflüsse in einer Tabelle abgelegt sind. Die Tabelle hat eine zweidimensionale Erstreckung, wobei die eine Dimension der Tabelle von einer vorgebbaren Qualität des Datenflusses, einer sog. QoS-Level, und die andere Dimension von einer Wartezeit des Datenflusses, die der Differenz zwischen dem Zeitpunkt der geplanten Zuteilung von Zeitschlitzen für den Datenfluss und der aktuellen Zeit entspricht, abhängig ist. Anhand der QoS-Level kann bspw. unterschieden werden zwischen einem Datenfluss für eine Best-Effort-Anwendung und einem Datenfluss für eine QoS-Anwendung. Außerdem kann anhand der QoS-Level zwischen verschiedenen Anforderungen an die QoS-Anwendungen unterschieden werden. Die QoS-Level ist in dem Service Level Agreement (SLA) abgelegt. Jedem Datenfluss ist eine bestimmte QoS-Level aus dem Service Level Agreement (SLA) zugeordnet. Die Wartezeit eines Datenflusses wird um ein variables Wartezeitinkrement erhöht, wenn wenn dem Datenfluss Zeitschlitze zugeteilt worden sind. Die Größe des Wartezeitinkrements ist abhängig von der Anzahl der zugeteilten Zeitschlitze und von den für die Datenübertragung über diesen Datenfluss vereinbarten Qualitatsanforderungen. Mit fortschreitender Zeit wird die Wartezeit verringert.

Die Wartezeiten der aktiven Datenflüsse sind in verschiedene Kategorien, sog. Policy-Levels, unterteilt. Wenn die Wartezeit eines Datenflusses nach einer Erhöhung um das Wartezeitinkrement eine obere Zeitgrenze der bisherigen Policy-Level übersteigt, wird dem Datenfluss die nächst niedrigere Policy Level zugeordnet. Wenn die Wartezeit mit der Zeit kleiner wird, sind auch Sprünge in die nächst höhere Policy Level möglich. Es sind auch Sprünge um mehrere Policy-Levels auf einmal möglich. Durch die Einführung der Policy-Levels wird die Handhabung der einzelnen Datenflüsse deutlich vereinfacht. In der Tabelle in der Einheit Active Flows (ACT) sind die aktiven Datenflüsse also in Abhängigkeit von der QoS-Level und der Policy-Level in verschiedenen Feldern abgelegt.

Die Zuteilung von Zeitschlitzen geschieht in Abhängigkeit von der aktuellen Wartezeit bzw. Policy-Level des Datenflusses. Bei der Zuteilung von Zeitschlitzen können beliebige Strategien verfolgt werden. Bei einer Strategie können bspw. ausgehend von der ranghöchsten Policy-Level (mit den kürzesten Wartezeiten) einer bestimmten QoS-Level zunächst alle Anforderungen dieser Policy-Level abgearbeitet werden. Danach können nacheinander die Anforderungen der nächst niedrigeren Policy-Levels nacheinander jeweils vollständig abgearbeitet werden. Wenn die Anforderungen aller Policy-Levels dieser QoS-Level abgearbeitet worden sind, können die Anforderungen der ranghöchsten Policy-Level einer anderen QoS-Level nach der gleichen Strategie abgearbeitet werden.

Bei einer anderen Strategie können bspw. ausgehend von der ranghöchsten Policy-Level (mit den kürzesten Wartezeiten) einer bestimmten QoS-Level zunächst die Anforderungen aller übrigen Policy-Levels dieser QoS-Level abgearbeitet werden. Danach können die Anforderungen aller Policy-Levels anderer QoS-Levels nach der gleichen Strategie jeweils vollständig abgearbeitet werden. Außer den beiden hier exemplarisch erwähnten Strategien können von Anwendungsfall zu Anwendungsfall beliebig andere Strategien gewählt werden.

In der Einheit Active Flows (ACT) ist ein Zuteilungsverfahren in Form eines sog. Weighted Round Robin (WRR) vorgesehen. In dem Weighted Round Robin (WRR) werden die Bearbeitungszeiten für die einzelnen Datenflüsse für die Zuteilung der Zeitschlitze festgelegt. In dem Weighted Round Robin (WRR) wird festgelegt, wie die Informationen aus der Tabelle weiter verschoben werden; es werden Gewichte verteilt und die zur Verfügung stehende Prozessorzeit wird auf die zu verarbeitenden Datenflüsse verteilt.

Die aus dem Weighted Round Robin (WRR) ausgelesenen Informationen über die Zuteilung der Zeitschlitze werden von dem Weighted Round Robin (WRR) in eine Warteschlange Future Grants Output Buffer (Buffer) geschrieben. Die Informationen werden in einen Schreibbereich der Warteschlange (Buffer) geschrieben. Der Schreibbereich wird durch zwei variable Schwellen 23, 24 (vgl. Doppelpfeile) begrenzt. Die Positionen der Schwellen in der Warteschlange (Buffer) wird durch eine Einheit Delay Control (Delay Ctrl.) vorgegeben. In der Einheit Delay Control (Delay Ctrl.) werden die Positionen der Schwellen bspw. in Abhängigkeit von Vorgaben für die Wartezeiten und von Grenzwerten für die minimale Datenübertragungsraten ermittelt. Die Vorgaben und Grenzwerte 25 werden von einer Einheit Payload Control (Payload Ctrl.) an die Einheit Delay Control (Delay Ctrl.) übertragen. Die Einheit Payload Control (Payload Ctrl.) stellt eine Protokoll-Schnittstelle dar, die für eine Bedienung der Signalisierungsprotokolle (z. B. Verbindungsaufbau/ Verbindungsabbau) zuständig ist. Der Weighted Round Robin (WRR) schreibt Informationen 26 über die Auslastung des Sytems in die Delay Control (Delay Ctrl.), damit die Schwellen 23, 24 entsprechend variiert werden können.

Die Warteschlange (Buffer) erhält Informationen 28 von einer Einheit Slot Boundary Pattern (Slot BP), das von einer Einheit MAC Control (MAC Ctrl.) Informationen erhält. Die Einheit Slot Boundary Pattern (Slot BP) stellt eine Schnittstelle zu einem Prozess dar, der die Sequenz verschiedener Zeitschlitztypen definiert. Die Einheit Slot Boundary Pattern (Slot BP) gibt an, was zu welchem Zeitpunkt mit den Zeitschlitzen gemacht wird. Die zugeordneten Zeitschlitze 29 werden aus der Warteschlange (Buffer) zu den ermittelten Zeitpunkten über eine Einheit Grant Exit an den MAC Message Handler Downstream (MAC down) übermittelt. Die Informationen 29 werden aus einem bestimmten Speicherbereich der Warteschlange (Buffer) asynchron ausgelesen. Die Einheit Grant Exit steht mit einem Slot Counter (Slot Count) in Verbindung, der es Endgeräten 12, 13, 14 (z. B. Modems) ermöglicht, die absolute Zeit zu erkennen. Der Slot Counter (Slot Count) ist für eine Synchronisation zwischen der Schicht 1 und der Schicht 2 des ISO/OSI-Schichtenmodells zuständig. Von der Einheit Grant Exit werden außerdem Informationen 30 an einen M-Bit Pattern Generator (M-Bit) übermittelt. Zwischen dem M-Bit Pattern Generator (M-Bit) und dem MAC Message Handler Downstream (MAC down) findet eine Synchronisation 31 statt.

Die Vorteile der vorliegenden Erfindung liegen insbesondere darin, dass die Übertragungsrate für jeden einzelnen Datenfluss und nicht nur für das gesamte Datennetzwerk 1 beobachtet wird. Erst dadurch wird es möglich, individuell für jeden Datenfluss Zeitschlitze nach bestimmten Vorgaben (aus dem Sevice Level Agreement, SLA) zu vergeben. Die Vorgaben werden in Abhängigkeit von der Art der Anwendung, innerhalb der die Datenübertragung erfolgt, im Vorfeld der Datenübertragung festgelegt.

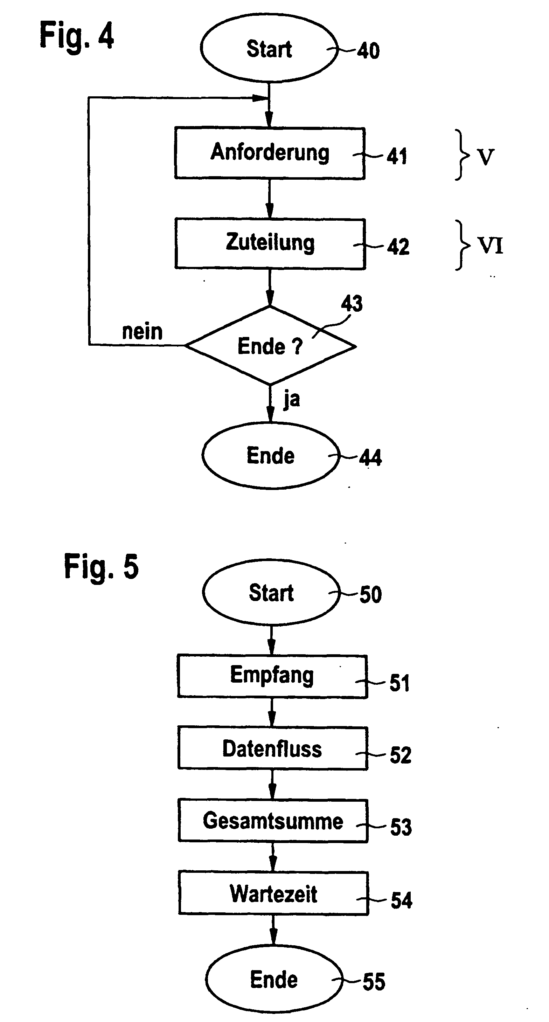

In Figur 4 ist ein Ablaufdiagramm eines erfindungsgemäßen Verfahrens dargestellt. Das erfindungsgemäße Verfahren ist für alle physikalischen Datennetzwerke 1 anwendbar, in denen die Vergabe von Zeitschlitzen für jede Datenübertragung zwischen den Endgeräten 12, 13, 14 und dem Steuergerät 10 ausgehandelt werden muss. Das Verfahren wird in dem Steuergerät 10 aus Figur 2 ausgeführt. Es beginnt in einem Funktionsblock 40. Nacheinander werden dann in Funktionsblöcken 41, 42 zwei Tasks durchlaufen. In dem Funktionsblock 41 werden eingehende Anforderungen 20 von Endgeräten 12, 13, 14 des Datennetzwerks 1 nach Zeitschlitzen für eine Datenübertragung verarbeitet. In dem Funktionsblock 42 werden dann den Endgeräten 12, 13, 14 angeforderte Zeitschlitze zumindest teilweise zugeteilt. Die beiden Tasks werden so lange zyklisch durchlaufen, bis in einem Abfrageblock 43 das Ende des Verfahrens festgestellt wird. In einem Funktionsblock 44 wird das Verfahren beendet. Alternativ können die Tasks aus einem übergeordneten Steuerprogramm heraus auch bspw. durch Interrupts zu bestimmten Zeitpunkten oder ereignisgesteuert aufgerufen werden (asynchrone Ausführung).

In Figur 5 ist ein Ablaufdiagramm der Task aus Funktionsblock 41 der Figur 4 dargestellt. Die Task beginnt in einem Funktionsblock 50. In einem Funktionsblock 51 wird eine Anforderung 20 eines Endgeräts 12, 13, 14 empfangen. In einem Funktionsblock 52 wird der Datenfluss ermittelt, für den die Anforderung 20 bestimmt ist. In einem Funktionsblock 53 wird die Gesamtsumme (Grant Sum) des ermittelten Datenflusses um die Anzahl der Zeitschlitze erhöht, die mit der Anforderung 20 angefordert wurden. In einem Funktionsblock 54 wird ein Startwert für die Wartezeit des Datenflusses vorgegeben. Außerdem kann in diesem Funktionsblock abhängig von der Wartezeit die entsprechende Policy-Level des Datenflusses ermittelt werden. In einem Funktionsblock 55 ist die Task beendet.

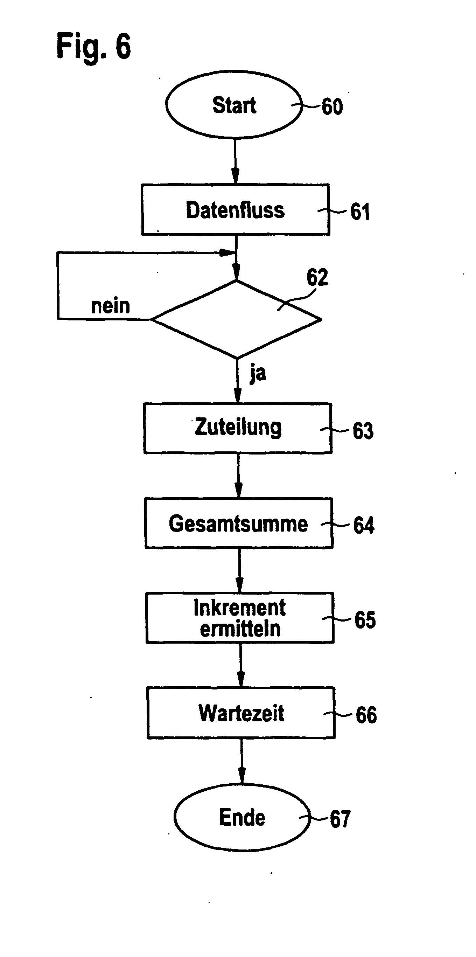

In Figur 6 ist ein Ablaufdiagramm der Task aus Funktionsblock 42 der Figur 4 dargestellt. Die Task beginnt in einem Funktionsblock 60. In einem Funktionsblock 61 wird aus allen aktiven Datenflüssen ein bestimmter Datenfluss für die Zuteilung von Zeitschlitzen ausgewählt. Die Auswahl des Datenflusses erfolgt in Abhängigkeit von der Wartezeit (Policy-Level) und von Vorgaben hinsichtlich der Qualität der Datenübertragung (QoS-Level) des Datenflusses nach einer vorgebbaren Strategie. Eine Strategie kann während der Ausführung des erfindungsgemäßen Verfahrens beibehalten werden oder aber zeitabhängig oder ereignisgesteuert wechseln. Eine mögliche Strategie besteht darin, dass zunächst diejenigen Datenflüsse ausgewählt werden, an die relativ hohe Vorgaben hinsichtlich der Qualität der Datenübertragung (QoS-Level) gestellt werden und deren Wartezeiten (Policy-Level) relativ gering sind. Danach können diejenigen Datenflüsse mit der gleichen Wartezeit ausgewählt werden, die geringere Vorgaben hinsichtlich der Qualität haben. Alternativ können auch diejenigen Datenflüsse mit den gleichen Vorgaben hinsichtlich der Qualität ausgewählt werden, die höhere Wartezeiten haben.

In einem Abfrageblock 62 wird dann überprüft, ob für den ausgewählten Datenfluss die Wartezeit bereits abgelaufen ist. Der Abfrageblock 62 wird so lange durchlaufen, bis die Wartezeit abgelaufen ist. Sobald die Wartezeit abgelaufen ist, wird in einem Funktionsblock 63 dem Endgerät 12, 13, 14, das dem ausgewählten Datenfluss zugeordnet ist, eine vorgebbare Anzahl an Zeitschlitzen für die Datenübetragung über den ausgewählten Datenfluss zugeteilt. In einem Funktionsblock 64 wird die Gesamtsumme der für diesen Datenfluss angeforderten, aber noch nicht zugeteilten Zeitschlitze um die Anzahl der in dem Funktionsblock 63 zugeteilten Zeitschlitze verringert. In einem Funktionsblock 65 wird ein Wartezeitinkrement ermittelt, um das die Wartezeit erhöht wird. Das Wartezeitinkrement wird in Abhängigkeit von der Anzahl der in dem Funktionsblock 63 zugeteilten Zeitschlitze (je mehr Zeitschlitze zugeteilt wurden, desto größer wird das Inkrement gewählt) und in Abhängigkeit der Vorgaben hinsichtlich der Qualität der Datenübertragung (QoS-Level) ermittelt (die vorgegebenen Mindestanforderungen an die Qualität müssen eingehalten werden). Darüber hinaus kann das Wartezeitinkrement auch in Abhängigkeit von der aktuellen Policy-Level des Datenflusses ermittelt werden. In einem Funktionsblock 66 wird die Wartezeit dann um das ermittelte Wartezeitinkrement erhöht. Das kann u.U. dazu führen, dass der Datenfluss in eine andere Policy-Level rutscht. In einem Funktionsblock 67 ist die Task beendet.

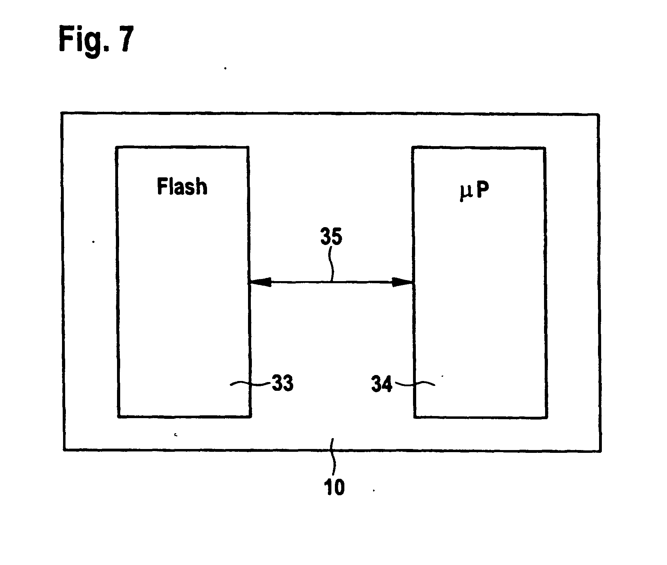

In Figur 7 ist das Steuergerät 10 dargestellt. Das Steuergerät 10 umfasst ein Speicherelement 33, auf dem ein Computerprogramm abgespeichert ist. Das Speicherelement 33 ist als ein elektronisches Speichermedium, bspw. als ein Flash-Memory, ausgebildet. Das Computerprogramm ist auf einem Rechengerät 34 des Steuergeräts 10 ablauffähig. Zur Ausführung des Computerprogramms auf dem Rechengerät 34 wird das Computerprogramm entweder in seiner Gesamtheit oder befehlsweise aus dem Speicherelement 33 über eine Datenübertragungsverbindung 35 an das Rechengerät 34 übertragen. Das Computerprogramm ist zur Ausführung des erfindungsgemäßen Verfahrens geeignet, wenn es auf dem Rechengerät 34 abläuft.

## Patentansprüche

1. Verfahren zur Übertragung von Daten in variablen Zeitschlitzen zwischen einem Steuergerät (10) eines paketorientierten Datennetzwerks (1) einerseits und einem Endgerät (12, 13, 14) eines Teilnehmers des Datennetzwerks (1) andererseits, wobei einem Endgerät (12, 13, 14) nach Anforderung durch das Endgerät (12, 13, 14) und in Abhängigkeit von der in dem Datennetzwerk (1) zur Verfügung stehenden Übertragungskapazität Zeitschlitze zur Datenübertragung zugeteilt werden, wobei für jeden Datenfluss eines Endgeräts (12, 13, 14) des Datennetzwerks (1) die Datenübertragungsrate gesondert beobachtet wird, **dadurch gekennzeichnet, dass** als Maß für die Datenübertragungsraten der Datenflüsse für jeden Datenfluss eine dynamische Wartezeit beobachtet wird, die zwischen der aktuellen Zeit bis zur Zuteilung von Zeitschlitzen zur Datenübertragung vergeht, und dem Endgerät (12, 13, 14) weitere Zeitschlitze für einen der Datenflüsse in Abhängigkeit von der beobachteten Wartezeit des Datenflusses zugeteilt werden.

2. Datenübertragungsverfahren nach Anspruch 1, **dadurch gekennzeichnet, dass** die dynamische Wartezeit für einen Datenfluss nach der Zuteilung von Zeitschlitzen für den Datenfluss um ein Wartezeitinkrement erhöht wird.

3. Datenübertragungsverfahren nach Anspruch 2, **dadurch gekennzeichnet, dass** das Wartezeitinkrement in Abhängigkeit von der Anzahl der zugeteilten Zeitschlitze erhöht wird.

4. Datenübertragungsverfahren nach einem der Ansprüche 1 bis 3, **dadurch gekennzeichnet, dass** die Wartezeit eines Datenflusses in Abhängigkeit von einer für den Datenflusses vorgebbaren Datenübertragungsrate ermittelt wird.

5. Datenübertragungsverfahren nach einem der Ansprüche 1 bis 4, **dadurch gekennzeichnet, dass** für jeden Datenfluss eines Endgeräts (12, 13, 14) die Gesamtsumme aller Anforderungen nach Zeitschlitzen gespeichert wird, wobei die Gesamtsumme bei einer Anforderung nach Zeitschlitzen um die Anzahl an angeforderten Zeitschlitzen erhöht und bei einer Zuteilung von Zeitschlitzen um die Anzahl an zugeteilten Zeitschlitzen erniedrigt wird.

6. Steuergerät (10) **dadurch gekennzeichnet, dass** das Steuergerät (10) Mittel zur Ausführung allerschritte eines Verfahrens nach einem der Ansprüche 1 bis 5 aufweist.

7. Computerprogramm, das auf einem Rechengerät (34), insbesondere auf einem Mikroprozessor, eines Steuergeräts (10) für ein paketorientiertes Datennetzwerk (1) zur Übertragung von Daten in variablen Zeitschlitzen ablauffähig ist, **dadurch gekennzeichnet, dass** das Computerprogramm zur Ausführung der Schritte des Verfahrens nach einem der Ansprüche 1 bis 5 programmiert ist, wenn es auf dem Rechengerät (34) abläuft.

8. Speicherelement (33), insbesondere Random-Access-Memory, Read-Only-Memory oder Flash-Memory, **dadurch gekennzeichnet, dass** auf dem Speicherelement (33) ein Computerprogramm abgespeichert ist, das zur Ausführung der Schritte des Verfahrens nach einem der Ansprüche 1 bis 5 geeignet ist, wenn es auf einem Rechengerät (34) abläuft.

## Claims

1. Procedure for the transmission of data in variable time slots between a controller (10) of a packet-oriented data network (1) on the one hand and a terminal (12, 13, 14) of a user of the data network (1) on the other hand, time slots for the data transmission being assigned to a terminal (12, 13, 14) following request made by the terminal (12, 13, 14) and in dependence on the transmission capacity available in the data network (1), the data transmission rate being monitored separately for each data flow of a terminal (12, 13, 14) of the data network (1), **characterized in that**, as a measure of the data transmission rates of the data flows, there is monitored for each data flow a dynamic wait time which elapses between the current time and the allocation of time slots for the data transmission, and further time slots are allocated to the terminal (12, 13, 14) for one of the data flows in dependence on the monitored wait time of the data flow.

2. Data transmission procedure according to Claim 1, **characterized in that** the dynamic wait time for a data flow is increased by one wait time increment following the allocation of time slots for the data flow.

3. Data transmission procedure according to Claim 2, **characterized in that** the wait time increment is increased in dependence on the number of allocated time slots.

4. Data transmission procedure according to any one of Claims 1 to 3, **characterized in that** the wait time of a data flow is determined in dependence on a data transmission rate which can be predetermined for the data flow.

5. Data transmission procedure according to any one of Claims 1 to 4, **characterized in that** the sum total of all requests for time slots is stored for each data flow of a terminal (12, 13, 14), the sum total being increased, upon a request for time slots, by the number of requested time slots and being lowered, upon an allocation of time slots, by the number of allocated time slots.

6. Controller (10), **characterized in that** the controller (10) has means for executing all steps of a procedure according to any one of Claims 1 to 5.

7. Computer program which can be executed on a computing device (34), particularly on a microprocessor, of a controller (10) for a packet-oriented data network (1) for the transmission of data in variable time slots, **characterized in that** the computer program, when run on the computing device (34), is programmed to execute the steps of the procedure according to any one of Claims 1 to 5.

8. Storage element (33), particularly random-access memory, read-only memory or flash memory, **characterized in that** there is stored on the storage element (33) a computer program which, when run on a computing device (34), is suitable for executing the steps of the procedure according to any one of Claims 1 to 5.

## Revendications

1. Procédé pour la transmission de données dans des intervalles de temps variables entre une unité de commande (10) d'un réseau de données par paquets (1) d'une part et un équipement terminal (12, 13, 14) d'un participant du réseau de données (1) d'autre part, des intervalles de temps pour la transmission de données étant attribués à un équipement terminal (12, 13, 14) sur une demande de l'équipement terminal (12, 13, 14) et en fonction de la capacité de transmission disponible dans le réseau de données (1) et la vitesse de transmission des données étant observée séparément pour chaque flux de données d'un équipement terminal (12, 13, 14) du réseau de données (1), **caractérisé en ce qu'**en tant que valeur de mesure pour les vitesses de transmission de données des flux de données soit observé pour chaque flux de données un temps d'attente dynamique qui s'écoule depuis le temps actuel jusqu'à l'attribution d'intervalles de temps pour la transmission des données et qu'en fonction du temps d'attente observé du flux de données, d'autres intervalles de temps pour l'un des flux de données soient attribués à l'équipement terminal (12, 13, 14).

2. Procédé pour la transmission de données selon la revendication 1, **caractérisé en ce qu'**après l'attribution d'intervalles de temps pour le flux de données, le temps d'attente dynamique pour un flux de données est augmenté de la valeur d'un incrément de temps d'attente.

3. Procédé pour la transmission de données selon la revendication 2, **caractérisé en ce que** l'incrément de temps d'attente est augmenté en fonction du nombre d'intervalles de temps attribués.

4. Procédé pour la transmission de données selon l'une quelconque des revendications 1 à 3, **caractérisé en ce que** le temps d'attente d'un flux de données est déterminé en fonction d'une vitesse de transmission de données pouvant être prescrite pour le flux de données.

5. Procédé pour la transmission de données selon l'une quelconque des revendications 1 à 4, **caractérisé en ce que** le montant total de toutes les demandes d'intervalles de temps est mémorisé pour chaque flux de données d'un équipement terminal (12, 13, 14), le montant total étant augmenté du nombre d'intervalles de temps demandés dans le cas d'une demande d'intervalles de temps et étant diminué du nombre d'intervalles de temps attribués dans le cas d'une attribution d'intervalles de temps.

6. Unité de commande (10), **caractérisé en ce qu'**elle comprend des moyens pour la réalisation de toutes les étapes d'un procédé selon l'une quelconque des revendications 1 à 5.

7. Programme d'ordinateur pouvant se dérouler sur un calculateur (34), en particulier sur un microprocesseur, d'une unité de commande (10) pour un réseau de données par paquets (1) servant à la transmission de données dans des intervalles de temps variables, **caractérisé en ce qu'**il est programmé pour la réalisation des étapes du procédé selon l'une quelconque des revendications 1 à 5 lorsqu'il se déroule dans le calculateur (34).

8. Elément de mémorisation (33), en particulier mémoire vive (RAM), mémoire à lecture seule (ROM) ou mémoire instantanée (Flash-memory), **caractérisé en ce que** sur cet élément de mémorisation (33) est mémorisé un programme d'ordinateur qui est approprié pour la réalisation des étapes du procédé selon l'une quelconque des revendications 1 à 5 lorsqu'il se déroule dans un calculateur (34).
